# EUROPEAN PATENT APPLICATION

(11) **EP 4 032 618 A1**
(43) Date of publication of application: **27.07.2022**
(21) Application number: 22151195.9
(22) Date of filing: 12.01.2022
(51) Int. Cl.: B05B 11/00

(54) **A PRE-COMPRESSION MINIATURIZED ATOMIZING DEVICE**

(30) Priority: 21.01.2021 CN 202110081191
(71) Applicant: Zhejiang Z&Z Industrial Co., Ltd., Yuyao City, Zhejiang 315400 (CN)
(72) Inventor: Huang, Jianyi, Yuyao, 315400 (CN)
(74) Representative: ZHAOffice SPRL

(57) **Abstract**

The invention provides a pre-push miniaturized atomizing device. It is designed to solve technical problems that currently available similar products are provided with glass balls which may cause backflowing of liquid and poor atomizing effect. For its essential points, the body of a atomizing device has an elastic body in the elastic body cavity at one end of the blank cap, the blank cap is fixed to the outer diameter of the pump nozzle underneath the L-shaped water inlet of the body, the blank cap and the elastic body are fastened to the hole on the side of the large ring of the body, the elastic body water outlet hole of the elastic body is provided with a valve needle that is fastened and fixed, the through-hole in the body on the side of the water outlet hole of the elastic body is connected to the piston cavity in the body, the outer diameter of the elastic body water outlet hole at this side of the through-hole is set against the inner wall underneath the piston cavity at the L-shaped water inlet hole of the body to form a spray hole clearance. As the valve needle floats up and down in the water outlet hole of the elastic body, the clearance passage between the valve needle and the elastic body opens or closes, while the spray hole clearance between the elastic body and the piston cavity in the body closes or opens corresponding to the deformation of the elastic body.

## Description

### Technical Field

The present invention relates to a pre-push miniaturized atomizing device, which is a pre-push miniaturized atomizing device.

### Background

A miniaturized spraying gun, or also referred to as a miniaturized atomizing device, this sort of products causes air flows in the pump body by piston moving in the pump boy, as the pressure decreases, the external pressure stays the same, so there is a pressure difference in and out of the pump body, which will divert liquid out of the pump body. Liquid is s instantly atomized once it meets high-speed airflows. The components in the currently available miniaturized atomizing device are made of different materials, including metal springs, glass balls or steel balls. The recyclable materials of the components have to be sorted before reused. This step is cumbersome and extremely impedes the recycling process of energy-saving, eco-friendly and discarded materials. Some of currently available miniaturized atomizing devices are all-plastic structures, an example is the application number: 201720890938.4 as disclosed in Chinese patent document, date of publication: 20 March 2018, title of utility model: "An all-plastic trigger atomizing device with high-toughness and strength modified plastic mesh cover"; another example is the application number: 2019107392213 as disclosed in Chinese patent document, date of publication: 20 December 2019, title of invention: "An all-plastic trigger atomizing device and a method for preparing eco-friendly high-toughness PP material". However, the above products and similar products have glass ball or plastic ball structure, which may easily cause backflowing and poor atomizing effect.

### Summary of the Invention

To address these deficiencies, the present invention provides a pre-push miniaturized atomizing device and a method for preparing a high-elasticity heat-resistant material in the technical art, to the extent that it can solve the issue of currently available similar products with glass ball may easily cause backflowing of liquid, poor atomizing effect, and technical issues in respect of the method of preparing materials for similar products that remain further improved. The object will be attained by the following technical alternatives.

A pre-push miniaturized atomizing device, wherein the said pre-push miniaturized atomizing device comprises a suction pipe, a large ring, a blank cap, a body, a piston, a diversion valve, a water divider, a head cap and a spring, the water inlet hole of the body is provided with a large ring, the piston cavity of the body is provided inwardly with a piston, the head cap at the water outlet hole of the body is provided inwardly with a water divider and a diversion valve, the piston assembly drives the piston to reciprocally move in the piston cavity of the body by pressing a lever or a head cap, and is reset by a spring; wherein an elastic body is disposed in the elastic body cavity at one end of the blank cap, the inner wall of the elastic body cavity of the blank cap is provided with fastening ribs, the fastening ribs of the blank cap are fixed to the outer diameter of the pump nozzle underneath the L-shaped water inlet hole of the body, the blank cap and the elastic body are fastened to the hole on the side of the large ring of the body, the elastic body water outlet hole of the elastic body is provided with a valve needle that is fastened and fixed, the thru-hole in the body at one side of the water outlet hole of the elastic body is connected with the piston cavity in the body, the outer diameter of the elastic body water outlet hole at this side of the thru-hole is set against the inner wall underneath the piston cavity at the L-shaped water inlet hole of the body to form a spray hole clearance. As the valve needle floats up and down in the water outlet hole of the elastic body, the clearance passage between the valve needle and the elastic body opens or closes, while the spray hole clearance between the elastic body and the piston cavity in the body will close or open as corresponding to the deformation of the elastic body. Thereby, the elastic body is deformed under hydraulic pressure and has a high-elasticity deformation coefficient, which can make flows steady. As it is made of soft material, it can deform and recover as normal; the valve needle substitutes for the existing glass ball structure, which can better form a tight sealing with the elastic body, and causes the whole gun boy to be all-plastic structure, which is easily degradable and recyclable. Alternatively, this atomizing device is an elastic structure, which is more explosive in the course of test spraying. There is no obvious water droplet in the course of test spraying, and the atomizing effect should be better; a valve needle substitutes for existing glass ball, the valve needle and the elastic body can be fit for sealing, which can suitably prevent liquid from backflowing in a direction from the piston cavity to the container. This atomizing device can be used on trigger spraying gun or compression, squeeze type similar atomizing products.

The atomizing device further comprises a lever and a cover, the said spring is a plastic spring, the said cover is disposed outwardly of the body, the water inlet hole of the body is a L-shaped water inlet hole, one end of the lever is fastened and hinged to the body, the lever connected with the piston assembly through a piston connecting rod, and the said plastic spring is fixed outwardly of the body at where the lever is fastened and hinged to the body. An embodiment of this atomizing device used for trigger spraying gun is described above.

The end of the blank cap of the elastic body is a large lid, and the other end of the symmetrical elastic body is a small lid. An arc convex bowl-shaped cavity is disposed on the wall between the large lid and the small lid of the elastic body. A valve needle is buckled and fixed to the water outlet in the small lid of the elastic body, the outer diameter sealing interface at the small lid of the elastic body is set against the inner wall of the lid cavity underneath the thru-hole of the body, the L-shaped water inlet side of the body of the lid cavity underneath the thru-hole is provided with an opening, a small lid of the elastic body is provide with a hole end, and the hole end of the elastic body is set against the top wall of the lid cavity. Thereby, deformation and reset can be realized by the bowl-shaped cavity of the elastic body. To press the lever, the gas in the piston cavity of the body is discharged. Due to pressure difference in the piston cavity of the pump body, the elastic body deforms and resets upwardly, the valve needle in the elastic body lifts up, the clearance passage between the valve needle and the elastic body is opened, liquid will flow from the large lid to the small lid through the valve needle, then enters the piston cavity of the body through the hole side with small lid. To press the lever again, the liquid pressure in the piston cavity rises and the elastic body is pushed to deform downwardly, the body passes through the spray hole clearance at the thru-hole opened by the elastic body, liquid will instantly enter the L-shaped water inlet hole of the body.

The outer diameter of the sealing interface of the said elastic body appears to be tapered horn-shaped bulges. Thereby, the sealing performance between the elastic body and the lid cavity of the body is further improved.

The said elastic body is clamped and fixed to an area between the blank cap and the body through a flanging in the outer diameter at one side of the large lid, the hole ring of the large lid of the elastic body is provided with equally spaced convex ribs, the convex ribs of the elastic body appear to be crown-shaped, and the convex ribs of the elastic body are provided with ridge and sags. Thereby, the elastic body on the seat of the blind cap forms a stable support, and the elastic body is better clamped and fixed between the blind cap and the body.

The outwardly protruded locational sealing ring is disposed in an area between the flanging and the bowl-shaped cavity of the said elastic body, the outer diameter of the locational sealing ring of the elastic body is set against the inner wall of the pump nozzle cavity underneath the L-shaped inlet hole of the body, and the lid cavity of the body is located in the pump nozzle cavity. Thereby, the sealing performance between the elastic body and the pump nozzle of the body is further improved.

The outer diameter of the pump nozzle cavity of the body is provided with a blank cap groove, the elastic body cavity of the blank cap is outwardly provided with an outer sleeve, the outer sleeve of the blank cap is fastened and fixed to the blank cap groove of the body, and the suction pipe is disposed in the suction cavity in the suction sleeve at the other side of the blank cap. The above structure facilitates the fixation between the body and the blind cap and the specific arrangement of the suction pipe.

The center of the elastic cavity above the suction cavity of the said blank cap is provided with equally spaced and protruded rib columns, the rib columns of the blank cap are located underneath the tapered rivet head at one end of the valve needle, and the tapered rivet head of valve needle is a square hook column with symmetrically arranged clearances. The above structure facilitates the control of the stroke distance when the valve needle moves up and down or opens and closes, and further makes the valve needle passage unobstructed.

The small lid of the said elastic body comprises a drain hole, an intermediate hole, a tapered hole, a stepped hole and a water filling hole, the inner diameter of the small lid of the elastic body increments in the respective order of tapered hole, stepped hole, and water filling hole, the diameter of the intermediate hole is smaller than that of the tapered hole and the drain hole; the valve needle appears to be T-shaped, the tapered rivet head at one end of the valve needle is interference-fixed to the intermediate hole of the elastic body, the chamfered arc surface at the other end of the valve needle is set against and sealed to the inner diameter of the tapered hole of the elastic body, and the valve needle floats up and down in the intermediate hole of the elastic body through the intermediate end between the tapered rivet head and the chamfered arc surface. The both ends of the said piston connecting rod are provided with ball heads respectively, and a ball head at one end of the piston connecting rod is connected to a piston through the piston connecting seat. According to the prior art and structure, the piston connecting seat can also be omitted

The plastic spring is omitted between the body and the lever, and the piston in the piston cavity of the body is set against a piston through a fixed metal spring, thereby realizing a built-in spring structure. A modification of the spring structure according to the prior art is described above. The said cover comprises a cover base and a cover lid, one end of the cover base is fastened and fixed to a lug in the outer diameter of the body above the large ring, the slide rail on the top of the cover lid is fixed to the slide rail on the top of the body, the fitting groove on the top of the cover lid is fastened and fixed to the hasp at one end of the slide rail on the top of the body, and the cover interface at the other end of the cover base is fastened and fixed to the other end of the cover lid, thereby forming a cover body. A modification of the cover structure according to the prior art is described above.

The said elastic body is a high-elasticity heat-resistant elastic body, the valve needle is a high-elasticity heat-resistant valve needle, the method for preparing the polymer of a high-elasticity heat-resistant material includes the following steps: methyl methacrylate 100 parts, synthetic rubber12-23 parts, organic acid 10-20 parts, CaCl₂ 1-10 parts, grapheme 1-2 parts, 2,5-dimethyl-2,5-bis(tert-butylperoxy)hexane 1-1.5 parts, n-butyl mercaptan of mercaptan compound 0.01-3 parts; add these materials to a reactor at a predefined ratio, add methanol at 5-25% of the total weight as solution, stir evenly, until completely dissolved in a temperature of 90-180°C, blow nitrogen into the mixture to remove the dissolved oxygen, perform polymerization in a temperature of 140-195°C; the residence duration is set to 300-30 minutes to obtain the reactant; pump the reactant to a devolatilization extruder, pelletized in a pelletizer to obtain a high heat-resistant eco-friendly elastic polymer.. The initial thermal degradation temperature of the above polymer is above 360°C. Thereby, an elastic body, which is made of high-elastic heat-resistant material, has a high-elasticity deformation coefficient and causes flows to be stable. An existing deformable body which is made of similar common materials is relatively soft, especially prone to severe shrinkage under heat state, resulting in irreversible deformation and deprived of the function as deformable body. However, a deformable body made of high-elasticity heat-resistant materials is characterized by heat resistant, immunity to diminished elasticity due to heat shrinkage, and normal deformation and recovery under heat, thereby improving product quality and extending service life.

The present invention is designed with reasonable, convenient assembly, user-friendly production and operation, good sealing performance and stability; it can be suitably used as an all-plastic trigger atomizing device for preventing backflowing between the piston and the body, and a modified structure of similar products. To replace the existing glass ball structure and work in the above-mentioned condition, a valve needle has to form a tight sealing with the elastic body more effectively. The whole gun body is an all-plastic structure, which should be non-toxic and non-toxic, easily degradable and recycled in the course of production, to the extent that environmental pollution hazards can be reduced and the reuse and sustainability of raw materials can be greatly enhanced.

### Accompanied Drawings

FIG 1 is a schematic cross-sectional structure diagram of an initial state of an embodiment of the present invention. The arrow as shown indicates the direction of liquid feeding, and the framed part is an enlarged view.
FIG.2 is a schematic sectional view of the structure of FIG 1 when the lever is pushed for the first time. The arrow as shown indicates is the direction of liquid feeding, and the framed part is an enlarged view, and the diversion valve is omitted here.
FIG. 3 is a schematic cross-sectional structure diagram of the lever in FIG. 2 after the lever is released. The arrow as shown indicates is the direction of liquid feeding, and the framed part is an enlarged view.
FIG. 4 is a schematic sectional view of the structure of Fig. 3 when the lever is pushed for the second time. The arrow as shown indicates is the direction of liquid feeding, the framed part is an enlarged view, and the diversion valve is added here.
FIG. 5 is a schematic cross-sectional view of the explosive structure between the blank cap, the elastic body and the valve needle of FIG. 1.
FIG. 6 is a schematic diagram of the three-dimensional structure of the valve needle of the present invention.
FIG. 7 is a first schematic diagram of the three-dimensional structure of the elastic body of the present invention.
FIG. 8 is a second schematic diagram of the three-dimensional structure of the elastic body of the present invention.
FIG. 9 is a schematic diagram of the three-dimensional structure of the blank cap of the present invention.
FIG. 10 is a schematic sectional view of the body of the present invention.
FIG. 11 is a schematic diagram of the bottom structure of the main body of the present invention.
FIG. 12 is a schematic view of a modified three-dimensional structure of the valve needle of the present invention.

Sequential numbering and name of accompanied drawings: 1. Suction pipe, 2. Large ring, 3. Blank cap, 301. Elastic cavity, 302. Fastening rib, 303. Suction sleeve, 304. Suction cavity, 305. Outer sleeve, 306. Rib Column, 4. Gasket, 5. Elastic body, 501. Sealing interface, 502. Bowl-shaped cavity, 503. Intermediate hole, 504. Convex rib, 505. Stepped hole, 506. Drain hole, 507. Tapered hole, 508. Hole end, 509, Flanging, 510. Water filling hole, 511. Locational sealing ring, 6. Valve needle, 601. Tapered rivet head, 602. Chamfered curved surface, 7. Cover bottom, 8. Cover lid, 9. Body, 901. Thru-hole, 902. Piston cavity, 903. Lid cavity, 904. Pump nozzle cavity, 905. Blank cap groove, 10. Piston, 11. Piston connecting seat, 12. Piston connecting rod, 13. Plastic spring, 14. Diversion valve, 15. Water divider, 16. Head cap, 17. Lever.

### Embodiments

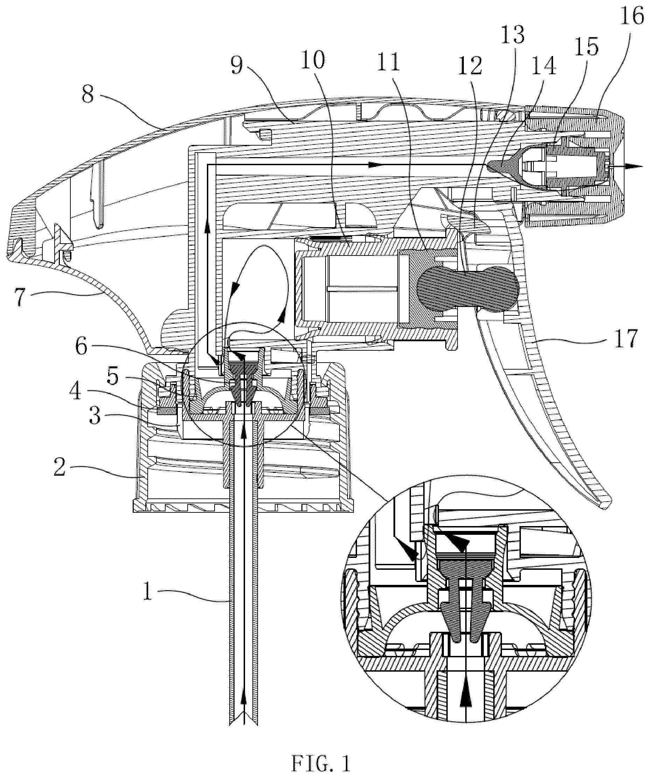

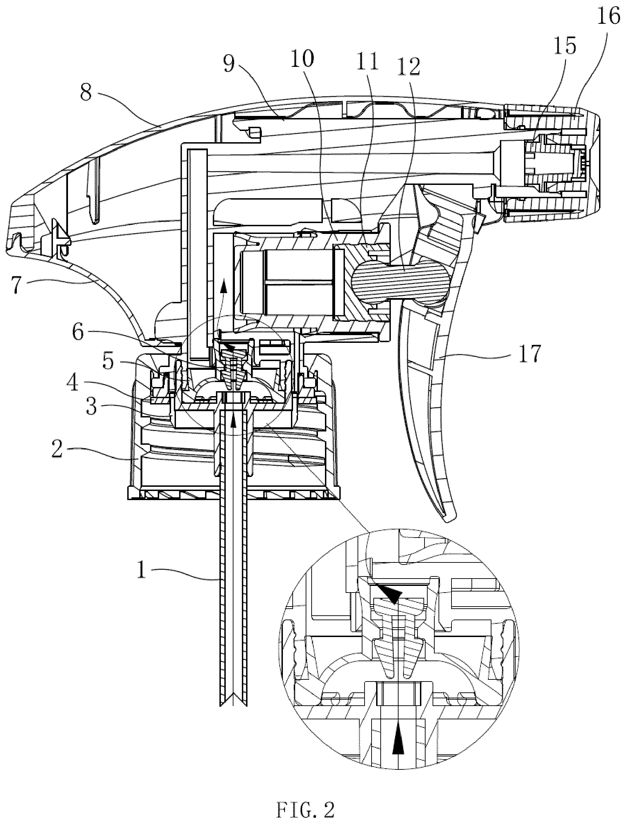

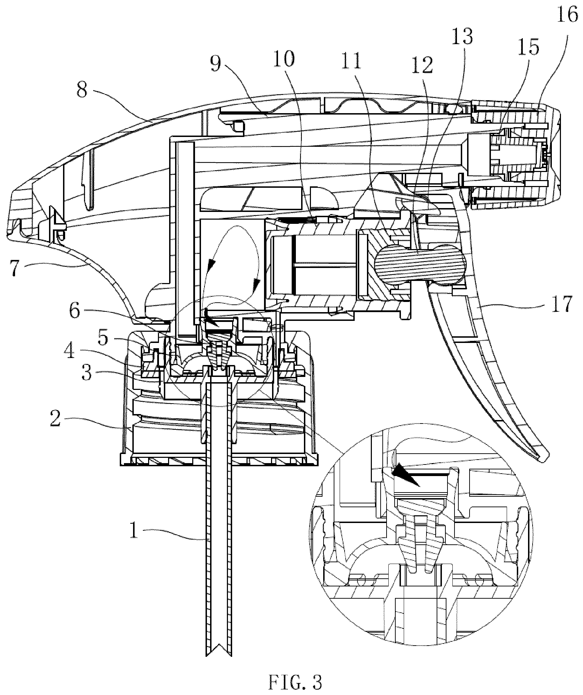

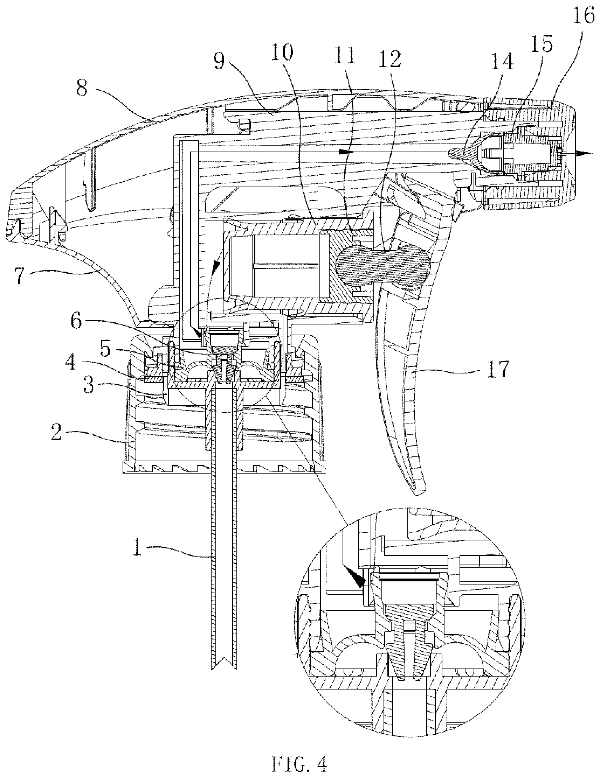

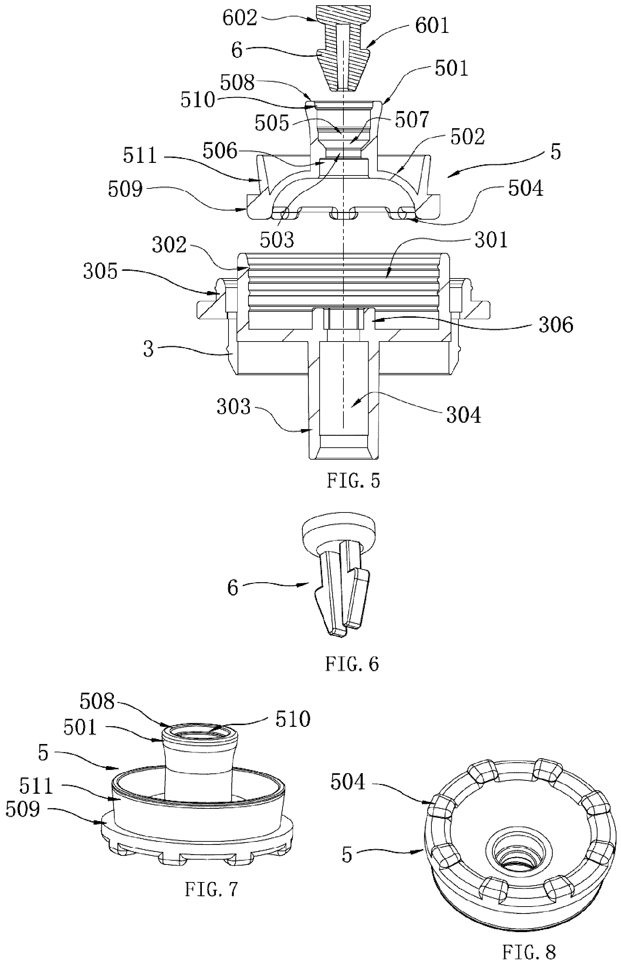

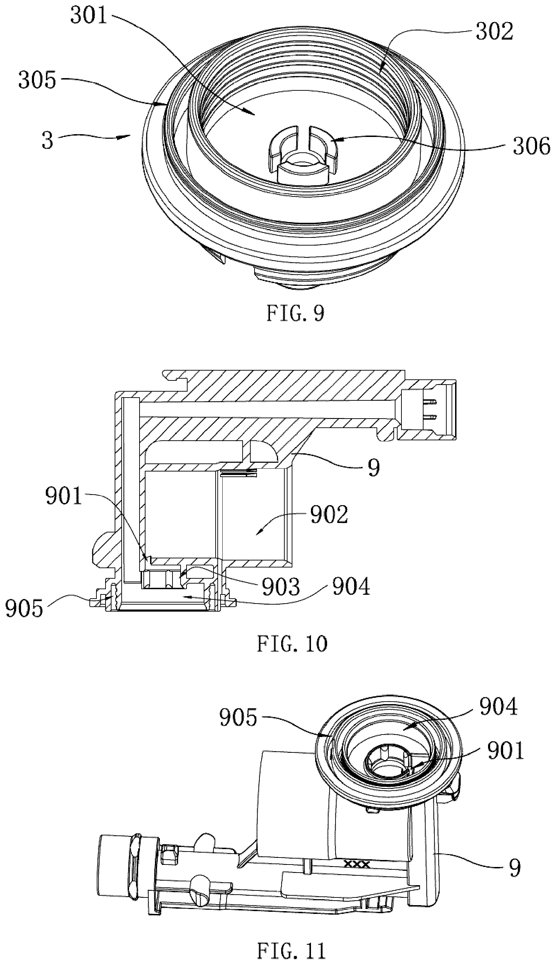

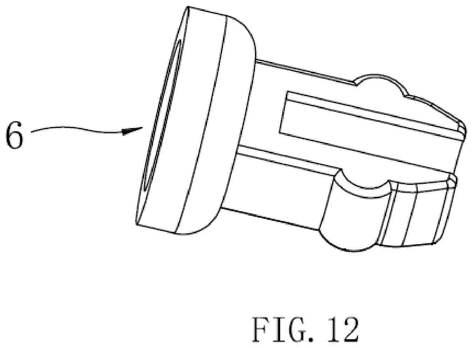

Now referring to the accompanying drawings, the structure and use of the present invention will be further described. As shown in FIGS.1- FIGS. 12, the cover of the atomizing device is disposed outwardly of the body 9, the said cover comprises a cover base 7 and a cover lid 8, one end of the cover base is fastened and fixed to a lug in the outer diameter of the body above the large ring 2, the slide rail on the top of the cover lid is fixed to the slide rail on the top of the body, the fitting groove on the top of the cover lid is fastened and fixed to the hasp at one end of the slide rail on the top of the body, and the cover interface at the other end of the cover base is fastened and fixed to the other end of the cover lid, thereby forming a cover body. The L-shaped water inlet hole of the body is provided with a large ring, the piston cavity 902 of the body is provided inwardly with a piston, one end of the lever is fastened and hinged to the body, the lever connected with the piston assembly through a piston connecting rod 12, both ends of the said piston connecting rod are provided with ball heads respectively, and a ball head at one end of the piston connecting rod is connected to a piston 10 through the piston connecting seat 11. The plastic spring is fixed outwardly of the body at where the lever is fastened and hinged to the body, the head cap at the water outlet hole of the body is provided inwardly with a water divider 15 and a diversion valve 14. An elastic body 5 is disposed in the elastic body cavity 301 at one end of the blank cap 3, the inner wall of the elastic body cavity of the blank cap is provided with fastening ribs 302, the fastening ribs of the blank cap are fixed to the outer diameter of the pump nozzle underneath the L-shaped water inlet hole of the body, the blank cap and the elastic body are fastened to the blank cap groove 905 on the hole side of the large ring of the body, the elastic body water outlet hole of the elastic body is provided with a valve needle 6 that is fastened and fixed, the through-hole 901 in the body at one side of the water outlet hole of the elastic body is connected with the piston cavity 902 in the body, the outer diameter of the elastic body water outlet hole at this side of the through-hole is set against the inner wall underneath the piston cavity at the L-shaped water inlet hole of the body to form a spray hole clearance. As the valve needle floats up and down in the water outlet hole of the elastic body, the clearance passage between the valve needle and the elastic body opens or closes, while the spray hole clearance between the elastic body and the piston cavity in the body will close or open as corresponding to the deformation of the elastic body.

The specific structure is described as follows: one end of the blank cap of the elastic body is a large lid, and the other end of the symmetrical elastic body is a small lid. An arc convex bowl-shaped cavity 502 is disposed on the wall between the large lid and the small lid of the elastic body, a valve needle is buckled and fixed to the water outlet in the small lid of the elastic body, the outer diameter sealing interface 501 at the small lid of the elastic body is set against the inner wall of the lid cavity 903 underneath the thro-hole of the body, the L-shaped water inlet side of the body of the lid cavity underneath the through-hole is provided with an opening, a small lid of the elastic body is provide with a hole end 508, and the hole end of the elastic body is set against the top wall of the lid cavity. The outer diameter of the sealing interface of the said elastic body appears to be tapered horn-shaped bulges. The said elastic body is clamped and fixed to an area between the blank cap and the body through a flanging 509 in the outer diameter at one side of the large lid, the hole ring of the large lid of the elastic body is provided with equally spaced convex ribs 504, the convex ribs of the elastic body appear to be crown-shaped, and the convex ribs of the elastic body are provided with ridge and sags. An outwardly protruded locational sealing ring 511 is disposed in an area between the flanging and the bowl-shaped cavity of the said elastic body, the outer diameter of the locational sealing ring of the elastic body is set against the inner wall of the pump nozzle cavity 904 underneath the L-shaped inlet hole of the body, and the lid cavity of the body is located in the pump nozzle cavity. The outer diameter of the pump nozzle cavity of the body is provided with a blank cap groove, the elastic body cavity 301 of the blank cap is outwardly provided with an outer sleeve 305, the outer sleeve of the blank cap is fastened and fixed to the blank cap groove of the body, and the suction pipe 1 is disposed in the suction cavity 304 in the suction sleeve 303 at the other side of the blank cap. The center of the elastic cavity above the suction cavity of the said blank cap is provided with equally spaced and protruded rib columns 306, the rib columns of the blank cap are located underneath the tapered rivet head 601 at one end of the valve needle, and the tapered rivet head of valve needle is a square hook column with symmetrically arranged clearances. The small lid of the said elastic body comprises a drain hole 506, an intermediate hole 503, a tapered hole 507, a stepped hole 505 and a water filling hole 510, the inner diameter of the small lid of the elastic body increments in the respective order of tapered hole, stepped hole, and water filling hole; the valve needle appears to be T-shaped, the tapered rivet head at one end of the valve needle is interference-fixed to the intermediate hole of the elastic body, the chamfered arc surface 602 at the other end of the valve needle is set against and sealed to the inner diameter of the tapered hole of the elastic body, and the valve needle floats up and down in the intermediate hole of the elastic body through the intermediate end between the tapered rivet head and the chamfered arc surface.

How this atomizing device works: as shown in FIGS. 1- FIGS.4, when the lever is pushed to fill liquid, the valve needle opens; when the lever is released, the lever is reset, the liquid in the piston cavity reaches a given volume, the liquid in the piston cavity instantly holds against the valve needle (when the liquid in the piston cavity reaches a given volume, push the lever, the pressure in the piston cavity gradually decreases, the liquid naturally holds against the valve needle, so that the valve needle can effectively seal the elastic body and prevent liquid from backflowing in the direction to the container); press the lever again, the elastic body is deformed. As the valve needle is seal-fit, the liquid will flows to the top of the elastic body which is forced to be deformed under a certain internal pressure (the elastic body is deformed under pressure, the elastic body sealing force slides to the opening underneath the through-hole of the body, the liquid is naturally pressurized to eject); release the lever again, the elastic body naturally resets and seal-fit with the body under the action of resilience. More details are described as follows: push the lever to drive the piston, the liquid drives the valve needle when filling liquid, the area where the valve needle is seal-fit to the elastic body opens, the liquid smoothly enters the piston cavity through the supply passage in the elastic body. When the liquid in the piston cavity reaches a given volume, push the lever again to drive the piston, then the piston moves in the piston cavity. As the internal pressure in the piston cavity gradually decreases, it attempts to push the liquid from the piston cavity to the elastic body. As the liquid flows, the liquid first holds against the valve needle, so that the valve needle is tightly sealed with the elastic body sealing surface under the action of liquid, and the liquid will not backflow to the container. After the valve needle is closed, the liquid is compressed in the lid cavity on top of the supply passage underneath the through-hole of the elastic body, the elastic body will be further deformed. Because the elastic body continues to slide along the sealing surface to the opening of the body with the elastic body, the elastic body will open. When the elastic body opens, the liquid will be distributed to the water outlet of the body. When the lever is released, the elastic body will smoothly reset and naturally seal with the body; because the elastic body is made of soft, easily deformed and resilient material, and given that it naturally rebounds under pressure, the curved surface of the elastic body is designed with the shape that allows for easy rebounding. Because the elastic body is designed in the position closer to the drainage area of the piston cavity, the liquid can naturally explode when the lever is pushed to test spray the liquid, and the liquid ejection is more explosive, the structure is designed to the extent that it has more explosive power and the test spraying pressure is stable per cycle, there is no obvious water droplets in the course of test spraying and the atomizing effect is improved.

## Claims

1. A pre-push miniaturized atomizing device, comprising a suction pipe (1), a large ring (2), a blank cap (3), a body (9), a piston (10), a diversion valve (14), a water divider (15), a head cap (16) and a spring, a water inlet hole of the body is provided with a large ring, a piston cavity (902) of the body is provided inwardly with a piston, the head cap at a water outlet hole of the body is provided inwardly with the water divider and the diversion valve, the piston assembly drives the piston to reciprocally move in the piston cavity of the body by pressing a lever or a head cap, and is reset by a spring; wherein an elastic body (5) is provided in an elastic body cavity (301) at one end of the blank cap (3), the inner wall of the elastic body cavity (301) of the blank cap (3) is provided with fastening ribs (302), the fastening ribs of the blank cap are fixed to the outer diameter of a pump nozzle underneath an L-shaped water inlet hole of the body (9), the blank cap and the elastic body are fastened to the hole on the side of the large ring (2) of the body, an elastic body water outlet hole of the elastic body is provided with a valve needle (6) that is fastened and fixed, a through-hole (901) in the body at one side of the water outlet hole of the elastic body is connected with the piston cavity (902) in the body, the outer diameter of the elastic body water outlet hole at this side of the through-hole is set against the inner wall underneath the piston cavity at the water inlet hole of the body to form a spray hole clearance, wherein, in operation, the valve needle floats up and down in the water outlet hole of the elastic body, the clearance passage between the valve needle and the elastic body opens or closes, while the spray hole clearance between the elastic body and the piston cavity in the body closes or opens corresponding to the deformation of the elastic body.

2. The pre-push miniaturized atomizing device according to Claim 1, wherein the atomizing device further comprises a lever (17) and a cover, the spring is a plastic spring (13), the cover is disposed outwardly of the body, the water inlet hole of the body is a L-shaped water inlet hole, one end of the lever is fastened and hinged to the body, the lever is connected with the piston assembly through a piston connecting rod (12), and the plastic spring is fixed outwardly of the body at where the lever is fastened and hinged to the body.

3. The pre-push miniaturized atomizing device according to Claim 1 or 2, wherein one end of the blank cap (3) of the elastic body (5) is a large lid, and the other end of the symmetrical elastic body is a small lid, an arc convex bowl-shaped cavity (502) is disposed on the wall between the large lid and the small lid of the elastic body, the valve needle (6) is buckled and fixed to the water outlet in the small lid of the elastic body, an outer diameter sealing interface (501) at the small lid of the elastic body is set against the inner wall of the lid cavity (903) underneath the through-hole (901) of the body (9), the L-shaped water inlet side of the body of the cover cavity underneath the through-hole is provided with an opening, a small lid of the elastic body is provided with a hole end (508), and the hole end of the elastic body is set against the top wall of the cover cavity.

4. The pre-push miniaturized atomizing device according to Claim 3, wherein the outer diameter of a sealing interface (501) of the elastic body (5) comprises horn-shaped bulges.

5. The pre-push miniaturized atomizing device according to Claim 3, wherein the elastic body (5) is clamped and fixed to an area between the blank cap (3) and the body (1) through a flanging (509) in the outer diameter at one side of the large lid, the hole ring of the large lid of the elastic body is provided with equally spaced convex ribs (504), the convex ribs of the elastic body appear to be crown-shaped, and the convex ribs of the elastic body are provided with ridge and sags.

6. The pre-push miniaturized atomizing device according to Claim 5, wherein an outwardly protruding locational sealing ring (511) is disposed in an area between the flanging (509) and the bowl-shaped cavity (502) of the elastic body, the outer diameter of the locational sealing ring of the elastic body is set against the inner wall of the pump nozzle cavity (904) underneath the L-shaped inlet hole of the body (9), and the lid cavity (903) of the body is located in the pump nozzle cavity.

7. The pre-push miniaturized atomizing device according to Claim 6, wherein the outer diameter of the pump nozzle cavity (904) of the body (9) is provided with a blank cap groove (905), the elastic body cavity (301) of the blank cap (3) is outwardly provided with an outer sleeve (305), the outer sleeve of the blank cap is fastened and fixed to the blank cap groove of the body, and the suction pipe (1) is disposed in the suction cavity (304) in the suction sleeve (303) at the other side of the blank cap.

8. The pre-push miniaturized atomizing device according to Claim 7, wherein the center of the elastic cavity (301) above the suction cavity (304) of the blank cap (3) is provided with equally spaced and protruded rib columns (306), the rib columns of the blank cap are located underneath a tapered rivet head at one end of the valve needle (6), and the tapered rivet head of valve needle (6) is a square hook column with symmetrically arranged clearances.

9. The pre-push miniaturized atomizing device according to Claim 3, wherein the small lid of the elastic body (5) comprises a drain hole (506), an intermediate hole (503), a tapered hole (507), stepped hole (505) and water filling hole (510), the inner diameter of the small lid of the elastic body increments in the respective order of tapered hole, stepped hole, and water filling hole, the diameter of the intermediate hole is smaller than that of the tapered hole and the drain hole; the valve needle (6) appears to be T-shaped, the tapered rivet head (601) at one end of the valve needle is interference-fixed to the intermediate hole of the elastic body, the chamfered arc surface (602) at the other end of the valve needle is set against and sealed to the inner diameter of the tapered hole of the elastic body, and the valve needle floats up and down in the intermediate hole of the elastic body through the intermediate end between the tapered rivet head and the chamfered arc surface.

10. The pre-push miniaturized atomizing device according to any of the preceding Claims , wherein both ends of the piston connecting rod (12) are provided with ball heads respectively, and a ball head at one end of the piston connecting rod is connected to a piston (10) through the piston connecting seat (11).

11. The pre-push miniaturized atomizing device according to any of the preceding Claims , wherein the plastic spring (13) is omitted between the main body (9) and the lever (17), and a piston (10) in the piston cavity (902) of the body (9) is set against a piston through a fixed metal spring.

12. The pre-push miniaturized atomizing device according to any of the preceding Claims , wherein the cover comprises a cover base (7) and a cover lid (7), one end of the cover base is fastened and fixed to a lug in the outer diameter of the body (9) above the large ring (2), the slide rail on the top of the cover lid is fixed to the slide rail on the top of the body, the fitting groove on the top of the cover lid is fastened and fixed to the hasp at one end of the slide rail on the top of the body, and the cover interface at the other end of the cover base is fastened and fixed to the other end of the cover lid, thereby forming a cover body.
